Europäisches Patentamt

European Patent Office

Office européen des brevets

(19)

(11) **EP 0 451 742 B1**

(12) **EUROPEAN PATENT SPECIFICATION**

(45) Date of publication and mention
of the grant of the patent:
**18.12.1996 Bulletin 1996/51**

(51) Int Cl.[6]: **G06F 15/80**, G06F 7/60

(21) Application number: **91105484.9**

(22) Date of filing: **06.04.1991**

(54) **Fuzzy inference device**

Unscharfe Folgerungsanlage

Dispositif à déduction floue

(84) Designated Contracting States:
**DE FR GB**

(30) Priority: **09.04.1990 JP 93632/90**

(43) Date of publication of application:
**16.10.1991 Bulletin 1991/42**

(73) Proprietor: **MATSUSHITA ELECTRIC INDUSTRIAL CO., LTD.**
**Kadoma-shi, Osaka-fu, 571 (JP)**

(72) Inventors:
• **Hayashi, Isao**
  **Osaka-shi, Osaka-fu (JP)**
• **Wakami, Noboru**
  **Hirakata-shi, Osaka-fu (JP)**
• **Nomura, Hiroyoshi**
  **Neyagawa-shi, Osaka-fu (JP)**

(74) Representative: **Eisenführ, Speiser & Partner**
**Martinistrasse 24**
**28195 Bremen (DE)**

(56) References cited:
**WO-A-89/11684**

• **INTERNATIONAL JOINT CONFERENCE ON NEURAL NETWORKS 17 June 1990, SAN DIEGO, CA pages III-365 - III-370 T.IWATA ET AL. 'Fuzzy Control Using Neural Network Techniques'**
• **INTERNATIONAL WORKSHOP OF NEURAL NETWORKS & THEIR APPLICATIONS 13 November 1989, NY pages 143-158 N. Giambiasi et al.: 'Une Approche Connexionniste Pour Calculer L'Implication Floue Dans Les Systemes A base de Regles'**

**Description**

BACKGROUND OF THE INVENTION

The present invention relates to an inference device which determines an inference result such as control value from input data or estimates membership in pattern recognition.

Initially, basic points of fuzzy inference are described briefly. In a control system to which human evaluation is related to, such a case may happen that a final inference result is determined by using indefinite variables judged by an operator, for example, "big", "medium", etc. An inference device based on fuzzy inference employs fuzzy variables as indefinite variables in an inference rule of "IF---THEN---" type.

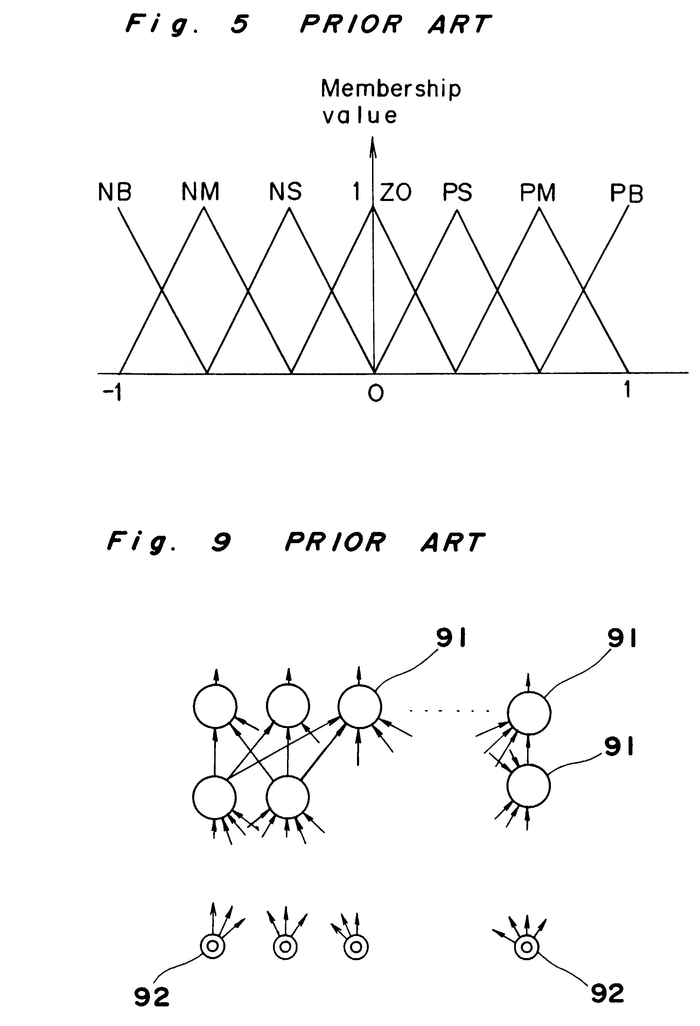

Fig. 5 shows one example of fuzzy variables. In Fig. 5, NB denotes Negative Big, NM denotes Negative Medium, NS denotes Negative Small, ZO denotes Zero, PS denotes Positive Small, PM denotes Positive Medium and PB denotes Positive Big. In fuzzy inference, a fuzzy variable is always written in an antecedent (IF part) of the inference rule, while a fuzzy variable or an equation is written in a consequent (THEN part) of the inference rule. When a real number or a fuzzy number is inputted, as data, to the inference device in the case where the fuzzy variable is written in the consequent, the inference device calculates degree of matching (membership value) between the real number or the fuzzy number and a membership function indicative of the fuzzy variable of the antecedent and determines an output fuzzy number of the consequent through a plurality of processings of degree of matching. It is possible to obtain an actual operational result by taking a value of center of gravity, etc. of output fuzzy numbers based on a plurality of rules. Meanwhile, in the case where the equation is written in the consequent, the actual operational result can be obtained without performing the processing of taking the value of center of gravity, etc.

One of conventional inference methods using this fuzzy inference is fuzzy modelling disclosed, for example, by Geun-Taek Kang and Michio Sugeno in a paper entitled "Fuzzy modelling" of SOCIETY OF INSTRUMENT AND CONTROL ENGINEERS PAPERS, Vol. 23, No. 6, pp. 650-652, 1987.

On the other hand, a method of and a device for automatically determining the membership function indicative of the fuzzy number and shape of the inference rule by introducing learning property of a neural network into fuzzy modelling are proposed in European Patent Application EP-A-0 378 689 by the present applicant; this document discloses an inference rule determination method by means of an inference apparatus using an inference rule of the type IF-THEN comprising a membership value determination unit, including all of the IF-parts and having a neural network, and individual inference result determiners corresponding to the THEN parts and determining the corresponding inference values for the inference rules; and a final inference result determiner which judges these inference results collectively to obtain the final results of the inference. This method is a kind of fuzzy modelling but is different from fuzzy modelling in that learning property of the neural network is introduced thereinto. The neural network is a mathematical network which simulates connection of nerve cells in the brain. In the neural network, a nonlinear problem can be solved by sequentially determining strength of connection among units constituting the neural network.

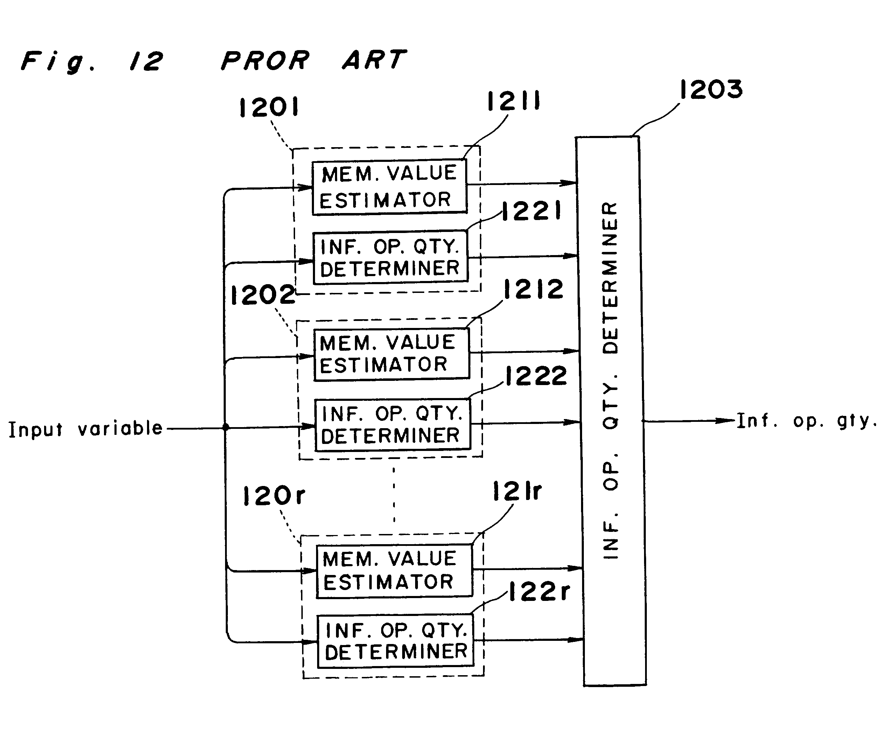

Fig. 12 shows one example of known fuzzy inference devices. The known fuzzy inference device includes inference rule executors 1201 to 120r provided for inference rules, respectively and an inference result determiner 1203 for determining a final inference result from estimated values obtained for the inference rules, respectively. Each of the inference rule executors 1201 to 120r is constituted by two portions. Namely, the inference rule executors 1201 to 120r include membership value estimators 1211 to 121r for identifying antecedents of the inference rules and inference result estimators 1221 to 122r for identifying consequents of the inference rules.

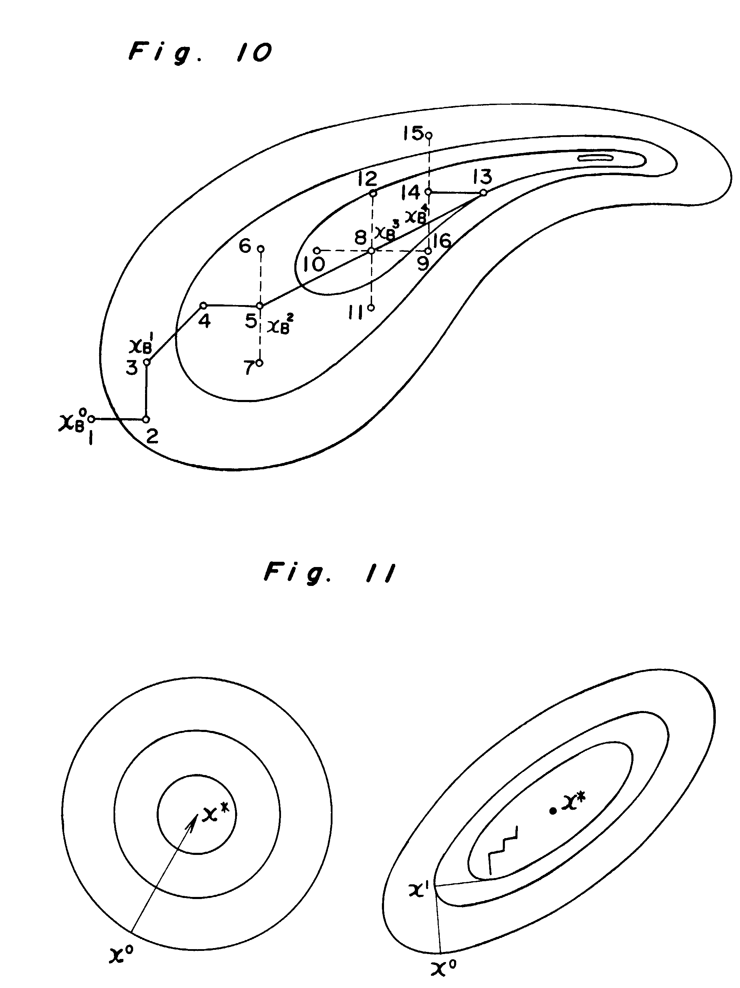

As shown in Fig. 9, the membership value estimators 1211 to 121r and the inference operational quantity estimators 1221 to 122r have structure of a multilayered network. In Fig. 9, reference numeral 91 denotes a multi-input/multi-output signal processor and reference numeral 92 denotes an input terminal of the neural network model. For each of the inference rules, each of the membership value estimators 1211 to 121r and each of the inference result estimators 1221 to 122r shown in Fig. 12 identify structures of the antecedent and the consequent, respectively and obtains from a given input value, a variable of a formula indicative of an estimated value of the membership. value of the antecedent and an inference operational quantity of the consequent. In accordance with each inference rule thus obtained, the inference result determiner 1203 determines the final inference result.

One example of operation of the known fuzzy inference device of Fig. 12 is described by using numerals indicated by Tadashi Kondo in a paper entitled "Revised GMDH Algorithm Estimating Degree of the Complete Polynomial" of SOCIETY OF INSTRUMENT AND CONTROL ENGINEERS PAPERS, Vol. 22, No. 9, pp. 928-934, 1986. The calculation algorithm is as follows.

[Step 1]

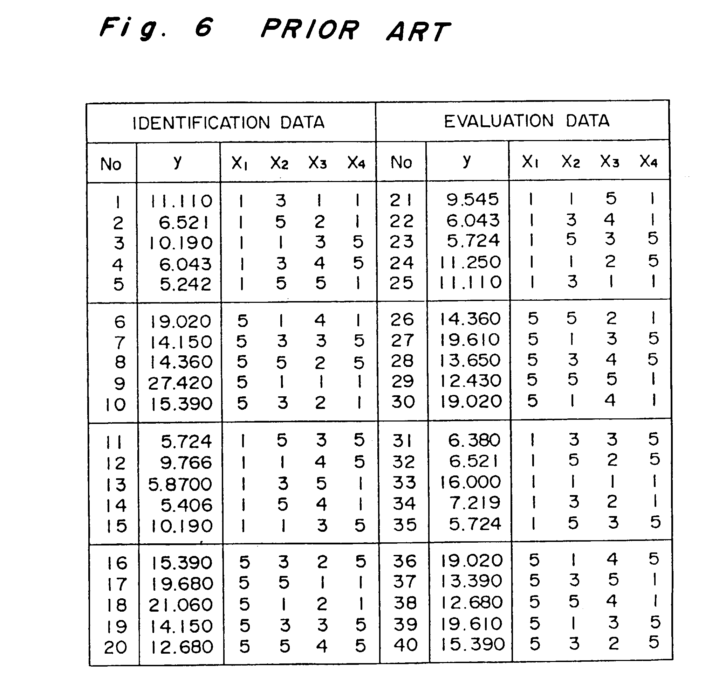

Input variables $x_{ij}$ (j=1, 2, ---, m) associated with observations $y_i$ (i=1, 2, ---, n) are determined. If necessary, input/output data $(x_i, y_i)$ is normalized. Fig. 6 shows the input/output data $(x_i, y_i)$.

EP 0 451 742 B1

[Step 2]

The input/output data $(x_i, y_i)$ is divided into data for identifying structure for model estimation (hereinbelow, referred to as "training data" (TRD) of $n_t$ in number) and data for evaluating an estimated model (hereinbelow, referred to as "checking data" (CHD) of $n_c$ in number such that the numbers $n_t$ and $n_c$ satisfy the relation of $(n=n_t+n_c)$. In Fig. 6, data numbered 1 to 20 is the training data, while data numbered 21 to 40 is the checking data. Thus, $n_t=n_c=20$ and $m=4$.

[Step 3]

By using clustering technique, the training data is divided into r portions in optimum manner. Character $R^s$ ($s=1$, 2, ---, r) denotes each of r divisions of learning data and character $(x_i^s, y_i^s)$ ($i=1$, 2, ---, $(nt)^s$) denotes contents of the learning data $R^s$ where $(nt)^s$ is the number of the training data in each learning data $R^s$. In this example, the natural number r is 2 and thus, four-dimensional space acting as space for input variables is divided into two portions.

[Step 4]

At this step, structure of the antecedent is identified. To this end, $x_i$ is allocated to an input value of an input layer, while $Wi^s$ is allocated to an output value of an output layer. The output value $W_i^s$ assumes 1 and 0 when the input value $x_i$ belongs to the learning data $R^s$ and does not belong to the learning data $R^s$, respectively for $i=1$, 2, ---, n and $s=1$, 2, ---, r.

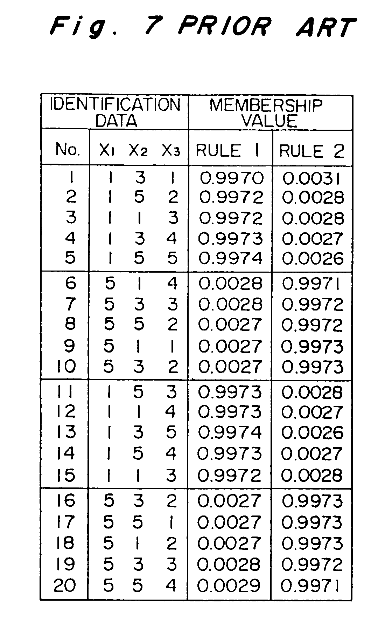

A neural network for estimating the output value $W_i^s$ by learning is identified. At this time, an estimated value of the degree $W_i^s$ to which the learning data $(x_i, y_i)$ belongs to the learning data $R^s$ is defined as a membership value of the antecedent. By using the three-layered neural network, learning is performed 5,000 times so as to obtain a fuzzy number of the antecedent. The fuzzy number of the antecedent for the learning data $R^s$ at this time is expressed by As. Fig. 7 shows the membership values of the fuzzy numbers As.

[Step 5]

Each evaluation data $(x_i, y_i)$ ($i=1$, 2, ---, $n_c$) of the checking data is substituted for the neural network obtained at step 4 by using the following equation:

$$W_i^s = \mu_{As}(x_i) \text{ for } i=1, 2, ---, n_c$$

where character $\mu$ denotes a membership function.

[Step 6]

At this step, structure of the consequent is identified. A structure model of the consequent corresponding to each rule is expressed by input/output relation of the neural network. The input values $x_{i1}, x_{i2}, ---, x_{im}$ ($i=1$, 2, ---, $(n_t)^s$) and the output value yi are allocated to the neural network so as to estimate the output value. The input values $x_{i1}, x_{i2}, ---, x_{im}$ ($i=1$, 2, ---, $n_c$) of the checking data are substituted for the learned neural network so as to obtain a sum $\theta_p$ of squares of error by the following equation:

$$\theta_p = \sum_i (y_i - ey_i)^2$$

where character $ey_i$ denotes an estimated value.

This sum $\theta_p$ is used as an input variable and a rule for stopping algorithm.

[Step 7]

By using variable reduction method, the input variables are reduced. An arbitrary one of the input variables is removed in each inference rule such that the neural network is identified by using the training data in the same manner as step 6. Subsequently, a sum $\theta_{p+1}$ of squares of estimated error of an inference result in the case of use of the checking data is calculated. In the case of the following equation (1) at this time, since it is considered that importance of the removed input variable x is low, the removed input variable x is cancelled.

3

$$\theta_p > \theta_{p+1} \qquad (1)$$

[Step 8]

Thereafter, steps 6 to 7 are repeated and the calculation is stopped until the equation (1) is not established for the whole input variables. A model which minimizes the value $\theta$ is an optimum neural network. The obtained fuzzy inference rules are given as follows.

$R^1$:   IF $x=(x_1,x_2,x_3)$ is $A_1$,
     THEN $y^1=NN_1(x_1,x_2,x_3)$
$R^2$:   IF $x=(x_1,x_2,x_3)$ is $A_2$,
     THEN $y^2=NN_2(x_2,x_3)$

In the above fuzzy inference rules, the equation: $y=NN(x)$ represents input/output relation of the neural network for each rule employed at the time of identification of structure of the consequent.

By steps 1 to 8, the antecedent and the consequent of each inference rule are identified and thus, identification of structure of the fuzzy model is completed. The inference result $y_i^*$ is given by the following equation (2):

$$y_i^* = (\sum_s W_i^s \times my_i^s)/\sum_s W_i^s \text{ for } i=1, 2, \text{---}, n \quad \text{---}(2)$$

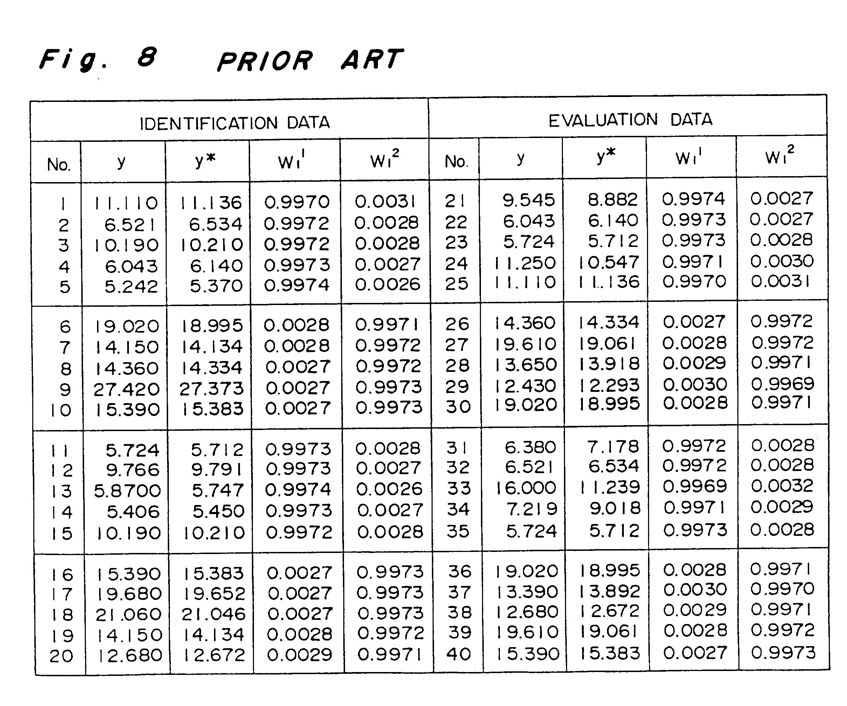

where character $my_i^s$ denotes an estimated value given from an optimum neural network obtained at step 7. Fig. 8 shows the inference result $y_i^*$ of the equation (2).

As described above, in known fuzzy inference employing the neural network, the inference rules can be obtained easily by utilizing learning property of the neural network without employing a method of discovery.

However, in the known inference device employing the neural network, the consequent of the fuzzy inference rule is fixed by the inference result estimators 1221 to 122r. Thus, even if inference situations change, the known inference device does not have a function of changing the inference result according to change of the inference situations.

Furthermore, the known inference device has such a drawback that since the structures of the antecedent and the consequent are identified by the neural network, all parameters to be determined in the neural network should be stored, thereby resulting in tremendously large memory capacity.

Therefore, the known inference device employing the neural network does not have algorithm of redetermining the structures of the antecedent and the consequent according to change of the inference situations once the structures of the antecedent and the consequent have been determined by using the neural network. As a result, in order to redetermine the structures of the antecedent and the consequent, the algorithm should be started again and thus, it is impossible to rapidly determine the inference result according to change of the inference situations.

SUMMARY OF THE INVENTION

Accordingly, an essential object of the present invention is to provide, with a view to eliminating the disadvantages inherent in conventional fuzzy inference devices, a fuzzy inference device in which structure of a consequent is determined by using nonlinear search algorithm, in which even if inference situations change, inference rules can follow the changing inference situations and which raises speed of following the changing inference situations and reduces memory capacity as set out in independent claims 1 and 2.

A fuzzy inference device according to a first embodiment of the present invention learns inference rules on the basis of an evaluation function in accordance with change of inference situations.

In a fuzzy inference device according to a second embodiment of the present invention, the inference rules are learned in the same manner as the first embodiment but arrangement of an antecedent of each inference rule is different from that of the first embodiment.

Meanwhile, a fuzzy inference device according to a third embodiment of the present invention learns the inference rules on the basis of right input/output data (teacher's data) in accordance with change of the inference situations.

Furthermore, in a fuzzy inference device according to a fourth embodiment of the present invention, the inference rules are learned in the same manner as the third embodiment but arrangement of the antecedent of each inference rule is different from that of the third embodiment.

In order to accomplish this object of the present invention, a fuzzy inference device for determining an inference result in accordance with inference rules each constituted by an antecedent and a consequent, according to a first embodiment of the present invention comprises: an inference rule division determiner which receives data of input variables and output variables so as to determine the number of the inference rules; an antecedent neural element for obtaining a membership value corresponding to an antecedent of a specific inference rule from the divided data of the input variables and the output variables; a situational change processor for adaptively determining an inference quantity of a consequent of each inference rule in the case of change of an initial state or inference situations; an inference operational quantity determiner which receives outputs from said antecedent neural element and said situational change processor and performs fuzzy inference in accordance with the inference rules so as to determine the inference result; and an evaluator for evaluating, on the basis of an evaluation reference, the inference result outputted by said inference operational quantity determiner; said situational change processor including an initialization determiner for initializing the inference value of the consequent by using an output value of said inference rule division determiner and a parameter searcher which begins a search from an output of said initialization determiner so as to search for an optimum parameter of the consequent in accordance with an output of said evaluator.

By the above described arrangement of the fuzzy inference device of the present invention, structure of the antecedent of each fuzzy inference rule written in the form "IF---THEN---" is identified by using nonlinear characteristics of a neural network and an optimum parameter of the consequent of each fuzzy inference rule is determined by nonlinear search method.

Consequently, in accordance with the present invention, the inference result can be flexibly adapted to changing inference situations at high speed and with reduced memory capacity.

## BRIEF DESCRIPTION OF THE DRAWINGS

This object and features of the present invention will become apparent from the following description taken in conjunction with the preferred embodiments thereof with reference to the accompanying drawings, in which:

Fig. 1 is a block diagram of a fuzzy inference device according to a first embodiment of the present invention;
Fig. 2 is a block diagram of a fuzzy inference device according to a second embodiment of the present invention;
Fig. 3 is a block diagram of a fuzzy inference device according to a third embodiment of the present invention;
Fig. 4 is a block diagram of a fuzzy inference device according to a fourth embodiment of the present invention;
Fig. 5 is a view explanatory of fuzzy variables;
Fig. 6 illustrates input/output data of a prior art fuzzy inference device;
Fig. 7 illustrates a membership value of each learning data in the prior art fuzzy inference device of Fig. 6;
Fig. 8 illustrates results of estimation of an inference operational quantity in the fuzzy inference device of Fig. 6;
Fig. 9 is a schematic view showing configuration of a neural network;
Fig. 10 is a conceptual view of pattern search method;
Fig. 11 is a conceptual view of steepest descent method; and
Fig. 12 is a block diagram showing one example of the prior art fuzzy inference device of Fig. 6.

## DETAILED DESCRIPTION OF THE INVENTION

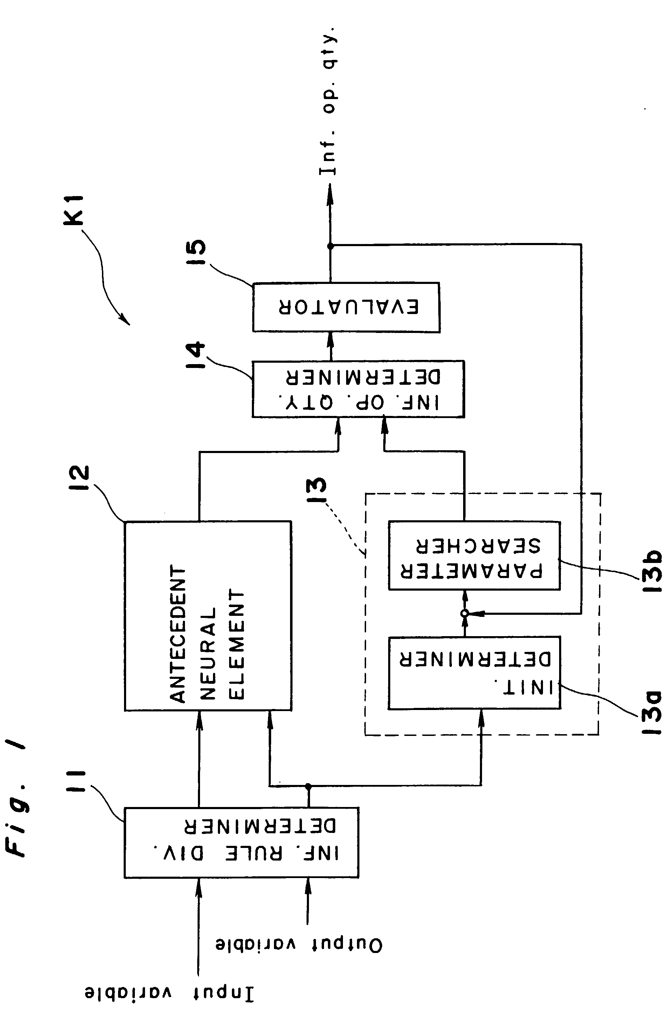

Referring now to the drawings, there is shown in Fig. 1, a fuzzy inference device K1 according to a first embodiment of the present invention. The device K1 includes an inference rule division determiner 11 which receives data of input variables and output variables so as to determine the number of inference rules and an antecedent neural element 12 for obtaining a membership value corresponding to an antecedent of a specific inference rule from the divided data of the input and output variables by using a neural network. The device K1 further includes a situational change processor 13 for adaptively determining an inference quantity of a consequent of each inference rule in the case of change of an initial state or inference situations, an inference result determiner 14 which receives outputs from the antecedent neural element 12 and the situational change processor 13 and performs fuzzy inference in accordance with the inference rules so as to determine an inference result and an evaluator 15 for evaluating, on the basis of an evaluation reference, the inference result outputted by the inference result determiner 14.

The situational change processor 13 is constituted by an initialization determiner 13a for initializing the inference quantity of the consequent by using an output value of the inference rule division determiner 11 and a parameter searcher 13b which begins a search from an output of the initialization determiner 13a so as to search for an optimum parameter of the consequent by changing parameters of the consequent in accordance with an output of the evaluator 15.

Hereinbelow, operational steps of the device K1 are described.

[Step 1]

At this step, input variables $x_{ij}$ (j=1, 2, ---, k) associated with observations $y_i$ (i=1, 2, ---, n) are determined. The following processings are performed at the inference rule division determiner 11. Initially, only necessary input variables are determined by using variable reduction method. Character m denotes the number of the input variables. Meanwhile, all the data are divided into r portions in optimum manner by using clustering technique. Character $R^s$ (s=1, 2, ---, r) denotes each of r divisions of the learning data and character $(x_i{}^s, y_i{}^s)$ (i=1, 2, ---, $n^s$) denotes contents of the learning data $R^s$ where $n^s$ is the number of data in each learning data $R^s$.

[Step 2]

At this step, a membership value of the antecedent is identified at the antecedent neural element 12. To this end, $(x_i{}^s, y_i{}^s)$ is allocated to an input value of an input layer, while $W_i{}^s$ is allocated to an output value of an output layer. The output value $W_i{}^s$ assumes 1 and 0 when the input value $(x_i, y_i)$ belongs to the learning data $R^s$ and does not belong to the learning data $R^s$, respectively for i=1, 2, ---, n and s=1, 2, ---, r.

A neural network for estimating the output value $W_i{}^s$ by learning is identified. At this time, an estimated value of the degree $W_i{}^s$ is defined as a membership value of the antecedent.

[Step 3]

At this step, an initial value for searching for a real number of the consequent is imparted by using the initialization determiner 13a of the situational change processor 13. For example, a mean value of output data obtained for each inference rule by the inference rule division determiner 11 is employed as the initial value. Namely, assuming that character sz denotes the initial value of the real number of the consequent for each inference rule s, the following equation is obtained.

$$sz^s = (\Sigma y_i{}^s)/n_s \text{ for } i=1, 2, ---, n_s$$

[Step 4]

An optimum real number of the consequent is searched for by the parameter searcher 13b by changing real numbers of the consequent in accordance with a certain search rule. For example, pattern search method or method of rotating directions is employed as a search method. Here, pattern search method is described briefly. In pattern search method, procedures of probing into state of an objective function adjacent to a current search point through search shift so as to aim at a direction of the bottom and shifting a pattern in the direction are repeated.

(1) Search shift:

If $f(x_{ik}+a_{ik}d_i) < f(x_{ik})$ for i=1, 2, ---, n, then: $x_{i+1k} - x_{ik}+a_{ik}d_i$ by regarding search shift as a success. Otherwise, the same procedure is performed by setting $a_{ik}=-a_{ik}$. If both of the methods are unsuccessful, $x_{i+1k}=x_{ik}$ is set. In the above description, character f denotes an evaluation function. Here, a problem for minimal realization is handled. Meanwhile, character $x_{ik}$ denotes a search point of k-th search in which the i-th parameter is considered currently. Furthermore, character $a_{ik}$ denotes weight greater than 0, i.e. $a_{ik}>0$ and character $d_i$ denotes a unit vector in which the i-th unit vector is 1.

(2) Pattern search:

A reference point $XB^k$ is shifted over a distance between the reference point $XB^k$ and a reference point $XB^{k-1}$ in a direction for connecting the reference points $XB^k$ and $XB^{k-1}$. Thus:

$$X^k = XB^k + (XB^k - XB^{k-1})$$

The reference point $XB^k$ denotes a search point at the time of completion of k-th search and character $X^k$ denotes a new search point. Fig. 10 is a conceptual view of pattern search.

In this algorithm, the evaluation function f is constituted for the evaluator 15. Meanwhile, the inference result obtained by the inference operational quantity determiner 14 is substituted for the evaluation function f so as to obtain an evaluated value. The inference operational quantity is an estimated value obtained as a result of fuzzy inference. The parameter $X^k$ searched for by the parameter searcher 13b is a real number value of the consequent.

By the above described arrangement of the device K1, the real number value of the consequent is initially set. Then, by using the real number value, the estimated value of fuzzy inference is obtained. Subsequently, the estimated value is substituted for the evaluation function and thus, overall evaluation is performed. The real number value of the consequent, which is formed by the parameter, is learned such that the evaluated value is improved. Finally, the inference rules are changed adaptively, so that fuzzy inference has a learning function.

Furthermore, since learning is performed at the consequent by using nonlinear search method, the inference rules can follow changing inference situations at a speed higher than that of a learning method employing a neural network, etc., so that its memory capacity can be reduced.

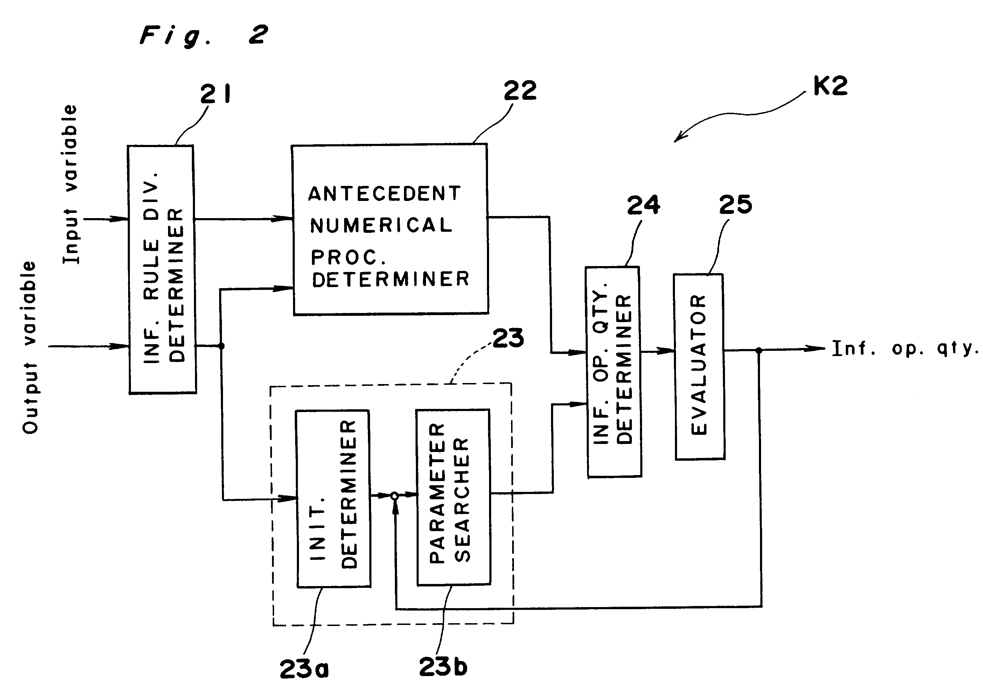

Fig. 2 shows a fuzzy inference device K2 according to a second embodiment of the present invention. The device K2 includes an inference rule division determiner 21 which receives data of input variables and output variables so as to determine the number of inference rules and an antecedent numerical processing determiner 22 for obtaining a membership value corresponding to an antecedent of a specific inference rule from the divided data of the input and output variables by calculating a spatial distance. The device K2 further includes a situational change processor 23 for adaptively determining an inference value of a consequent of each inference rule in the case of change of an initial state or inference situations, an inference result determiner 24 which receives outputs from the antecedent numerical processing determiner 22 and the situational change processor 23. and performs fuzzy inference. in accordance with the inference rules so as to determine an inference result and an evaluator 25 for evaluating, on the basis of an evaluation reference, the inference result outputted from the inference result determiner 24.

In the same manner as the situational change processor 13 of the device K1, the situational change processor 23 of the device K2 is constituted by an initialization determiner 13a for initializing the inference quantity of the consequent by using an output value of the inference rule division determiner 21 and a parameter searcher 13b which begins a search from an output of the initialization determiner 23a so as to search for an optimum parameter of the consequent by changing parameters of the consequent in accordance with an output of evaluator 25.

Hereinbelow, operational steps of the device K2 are described. Since steps 1, 3 and 4 of the device K2 are the same as those of the device K1, description thereof is abbreviated for the sake of brevity and thus, only step 2 is described.

[Step 2]

At this step, a membership value of the antecedent is determined at the antecedent numerical processing determiner 22. A distance from the input/output data $(x_i{}^s, y_i{}^s)$ of each inference rule to a core obtained for each inference rule by clustering is obtained and a value of the distance is normalized. Assuming that character $W_i{}^s$ denotes a normalized degree, the degree $W_i{}^s$ is defined as the membership value of the antecedent.

By the above described arrangement of the device K2, the inference rules are changed adaptively and thus, fuzzy inference has a learning function.

Meanwhile, in the device K2, since the antecedent is determined by using statistical processing and the consequent is learned by using nonlinear search method, the inference rules can follow changing inference situations at a speed higher than that of a learning method employing a neural network, etc., so that its memory capacity can be reduced.

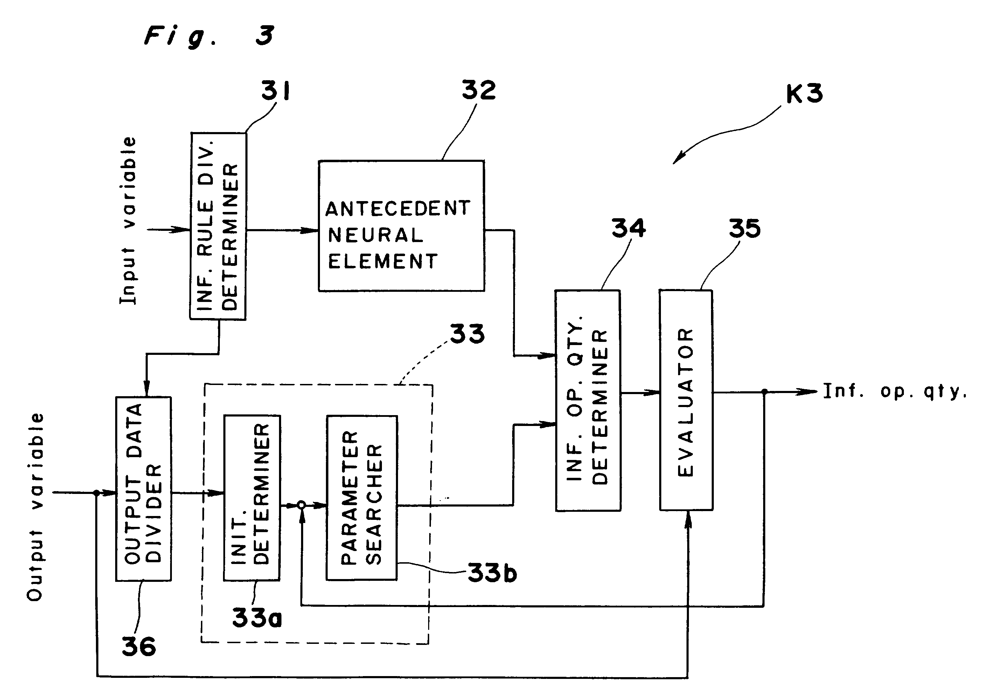

Fig. 3 shows a fuzzy inference device K3 according to a third embodiment of the present invention. The device K3 includes an inference rule division determiner 31 which receives data of input variables so as to determine the number of inference rules, an antecedent neural element 32 for obtaining a membership value corresponding to an antecedent of a specific inference rule from the divided data of the input variables by using a neural network and an output data divider 36 which receives data of output variables so as to divide the data of the output variables by the number of the inference rules in accordance with an output of the inference rule division determiner 31. The device K3 further includes a situational change processor 33 for adaptively determining an inference value of a consequent of each inference rule in the case of change of an initial state or inference situations, an inference result determiner 34 which receives outputs from the antecedent neural element 32 and the situational change processor 33 and performs fuzzy inference in accordance with the inference rules so as to determine an inference operational quantity and an evaluator 35 which compares the data of the output variables with the inference result outputted by the inference result determiner 34 so as to evaluate the inference result.

The situational change processor 33 is constituted by an initialization determiner 33a for initializing the inference quantity of the consequent by using an output value of the output data divider 36 and a parameter searcher 33b which begins a search from an output of the initialization determiner 33a so as to search for an optimum parameter of the consequent by changing parameters of the consequent in accordance with an output of the evaluator 35.

Hereinbelow, operational steps of the device K3 are described.

[Step 1]

At this step, input variables $x_{ij}$ (j=1, 2, ---, k) associated with observations $y_i$ (i=1, 2, ---, n) are determined. The following processings are performed at the inference rule division determiner 31. Initially, only necessary input variables are determined by using variable reduction method. Character m denotes the number of the input variables. Meanwhile, only the input data is divided into r portions in optimum manner by using clustering technique. Character $R^s$ (s=1, 2, ---, r) denotes each of r divisions of the data and character $x_i^s$ (i=1, 2, ---, $n^s$) denotes contents of the data $R^s$ where $n^s$ is the number of data in each data $R^s$. A group of the input data divided for each inference rule is fed to the output data divider 36.

[Step 2]

At this step, the output data is divided into r portions on the basis of an input data number by the output data divider 36. Character $y_i^s$ (i=1, 2, ---, $n^s$) denotes contents of each of r divisions of the output data.

[Step 3]

At this step, a membership value of the antecedent is identified at the antecedent neural element 32. To this end, $x_i$ is allocated to an input value of an input layer, while $W_i^s$ is allocated to an output value of an output layer. The output value $W_i^s$ assumes 1 and 0 when the input value $x_i$ belongs to the data $R^s$ and does not belong to the data $R^s$, respectively for i=1, 2, ---, n and s=1, 2, ---, r.

A neural network for estimating the output value $W_i^s$ by learning is identified. At this time, an estimated value of the degree $W_i^s$ is defined as a membership value of the antecedent.

[Step 4]

At this step, an initial value for searching a real number of the consequent is imparted by using the initialization determiner 13a of the situational change processor 13. For example, a mean value of output data obtained for each inference rule by the inference rule division determiner 31 is employed as the initial value. Namely, assuming that character sz denotes the initial value of the real number of the-consequent for each inference rule s, the following equation is obtained.

$$sz^s = (\Sigma y_i^s)/n_S \text{ for } i=1, 2, ---, n_s$$

[Step 5]

An optimum real number of the consequent is searched for by the parameter searcher 33b by changing real numbers z of the consequent in accordance with a certain search rule. For example, steepest descent method is employed as a search method.

Here, steepest descent method is described briefly. In this method, a directional vector $d^k$ at a point $X^k$ is expressed as follows.

$$d^k = -\nabla^t f(X^k)$$

In the above equation, $\nabla^t f(X^k)$ means a gradient vector of an evaluation function f at X. This equation is used because reduction rate of the evaluation function f is maximized in a direction of the directional vector $d^k$. In this algorithm, the following equation is used as the evaluation function f:

$$E = \Sigma(y_i - ey_i)^2/2$$

where character $ey_i$ denotes an estimated value of fuzzy inference.

A quantity $\Delta z^s$ of change, which determines a direction for learning the real numbers z of the consequent up to an optimum value, is obtained. Initially, partial differential of E is performed by z as follows:

$$dE/dz^s=(dE/dey_i) \times (dey_i/dz^s)$$

where $dE/dey_i=-(y_i-ey_i)$ and $dey_i/dz^s=W^s/\Sigma W^s$.
Thus, the following equation is obtained.

$$dE/dz^s=-(y_i-ey_i)W^s/\Sigma W^s$$

If the real numbers z of the consequent are changed in the direction determined by the following value $\Delta z^s$ of change in accordance with steepest descent method, the real numbers z are adaptively learned so as to be converged to the optimum value.

$$\Delta z^s=-\alpha(dE/dz^s)=\alpha(y_i-ey_i)W^s/\Sigma W^s$$

Fig. 11 is a conceptual view of steepest descent method. In this algorithm, the evaluation function f is substituted for the evaluator 35. Meanwhile, the inference result obtained at the inference result determiner 34 and a correct output value are substituted for the evaluation function f, whereby an evaluation value is obtained. The inference result is an estimated value obtained as a result of fuzzy inference and the parameter $X^k$ to be searched for by the parameter searcher 33b acts as the real number of the consequent.

By the above described arrangement of the device K3, the real number value of the consequent is initially set. Then, by using the real number value, the estimated value of fuzzy inference is obtained. Subsequently, the estimated value is substituted for the evaluation function and thus, overall evaluation is performed. The real number value of the consequent, which is formed by the parameter, is learned such that the evaluated value is improved. Finally, the inference rules are changed adaptively and thus, fuzzy inference has a learning function.

Meanwhile, since learning is performed at the consequent by using nonlinear search method, the inference rules can follow changing inference situations at a speed higher than that of a learning method employing a neural network, etc., so that its memory capacity can be reduced.

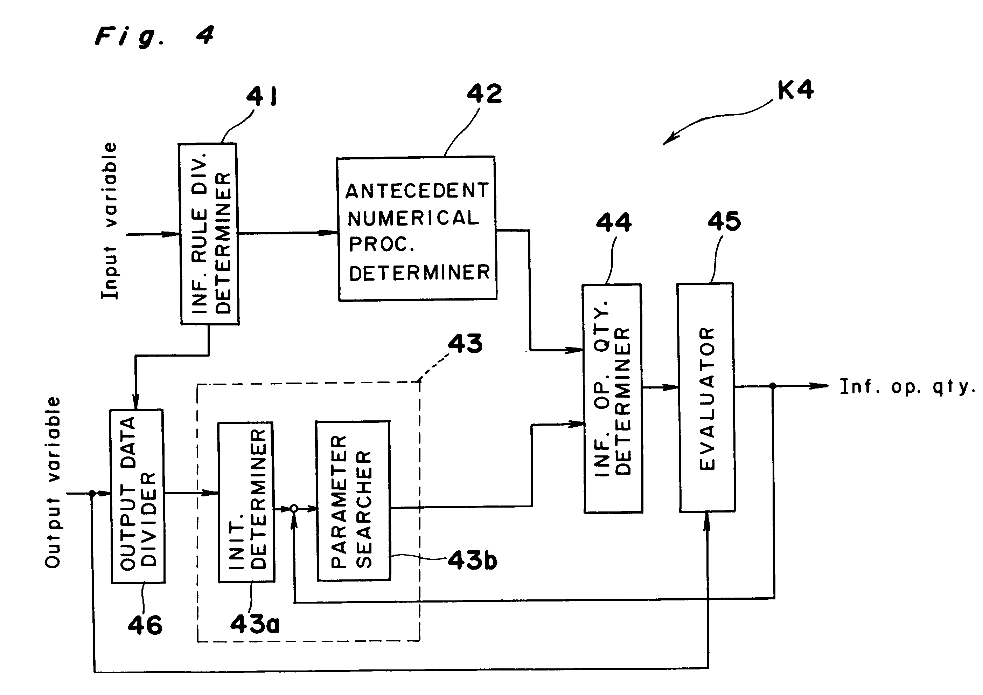

Fig. 4 shows a fuzzy inference device K4 according to a fourth embodiment of the present invention. The device K4 includes an inference rule division determiner 41 which receives data of input variables so as to determine the number of inference rules, an antecedent numerical processing determiner 42 for obtaining a membership value corresponding to an antecedent of a specific inference rule from the divided data of the input variables by calculating a spatial distance and an output data divider 46 which receives data of output variables so as to divide the data of the output variables by the number of the inference rules in accordance with an output of the inference rule division determiner 41. The device K3 further includes a situational change processor 43 for adaptively determining an inference quantity of a consequent of each inference rule in the case of change of an initial state or inference situations, an inference result determiner 44 which receives outputs from the antecedent numerical processing determiner 42 and the situational change processor 43 and performs fuzzy inference in accordance with the inference rules so as to determine an inference result and an evaluator 45 which compares the data of the output variables with the inference result outputted by the inference operational quantity determiner 44 so as to evaluate the inference result.

In the same manner as the situational change processor 33 of the device K3, the situational change processor 43 of the device K4 is constituted by an initialization determiner 43a for initializing the inference quantity of the consequent by using an output value of the output data divider 46 and a parameter searcher 43b which begins a search from an output of the initialization determiner 43a so as to search for an optimum parameter of the consequent by changing parameters of the consequent in accordance with an output of the evaluator 45.

Hereinbelow, operational steps of the device K4 are described. Since steps 1, 2, 4 and 5 of the device K4 are the same as those of the device K3, description thereof is abbreviated for the sake of brevity and thus, only step 3 is described.

[Step 3]

At this step, a membership value of the antecedent is determined at the antecedent numerical processing determiner 42. A distance from the input/output data $(x_i^s,y_i^s)$ of each inference rule to a core obtained for each inference rule by clustering is obtained and a value of the distance is normalized. Assuming that character $W_i^s$ denotes a normalized degree, the degree $W_i^s$ is defined as the membership value of the antecedent.

By the above described arrangement of the device K4, the inference rules are adaptively changed and thus, fuzzy inference has a learning function.

Meanwhile, in the device K4, since the antecedent is determined by using statistical processing and the consequent is learned by using nonlinear search method, the inference rules can follow changing inference situations at a speed higher than that of a learning method employing a neural network, etc., so that its memory capacity can be reduced.

In the present invention as described above, structure of the antecedent of each inference rule is identified by using nonlinear characteristics of the neural network and an optimum parameter of the consequent of each inference rule is determined such that the inference operational quantity can be adapted to changing inference situations at high speed and with reduced memory capacity. Therefore, in accordance with the present invention, the fuzzy inference device can provide an inference result satisfactory to the operator at all times.

Meanwhile, in the first and second embodiments of the present invention, the optimum parameter of the consequent is searched for by using pattern search method and method of rotating directions in which methods a search can be made even if an optimum value of the parameters is not required to be outputted. However, these methods may be replaced by random search method, feasible direction method or cutting plane method.

Furthermore, in the third and fourth embodiments of the present invention, the optimum parameter of the consequent is searched for by using steepest descent method in which a search can be made by formulating an evaluation function by using errors. However, this steepest descent method may be replaced by Newton's method, etc.

As is clear from the foregoing description, in the. present invention, the fuzzy inference rules can be changed automatically through a self-learning function even if inference situations change. Furthermore, the optimum parameter of the consequent is searched for by nonlinear search method.

Consequently, in accordance with the present invention, the inference result can be adapted to changing inference situations at high speed and with reduced memory capacity.

Although the present invention has been fully described by way of example with reference to the accompanying drawings, it is to be noted here that various changes and modifications will be apparent to those skilled in the art. Therefore, unless otherwise such changes and modifications depart from the scope of the present claims, they should be construed as being included therein.

**Claims**

1. A fuzzy inference device (K1; K2) for determining an inference result in accordance with inference rules each constituted by an antecedent and a consequent, comprising an inference result determiner (14; 24) which performs fuzzy inference in accordance with the inference rules so as to determine the inference result; characterized by an inference rule division determiner (11; 21) which receives data of input variables and data of output variables so as to determine the number of inference rules;

   an antecedent neural element (12) or an antecedent numerical processing determiner (22) for obtaining a membership value corresponding to an antecedent of a specific inference rule from the divided data of the input variables and the output variables;
   a situational change processor (13; 23) for adaptively determining an inference value of a consequent of each inference rule in the case of change of an initial state or inference situations; and
   an evaluator (15; 25) for evaluating the inference result outputted by said inference result determiner (14; 24) on the basis of an evaluation function f;
   said inference result determiner (14; 24) receiving outputs from said antecedent neural element (12) or said antecedent numerical processing determiner (22), respectively, and said situational change processor (13; 23); and
   said situational change processor (13; 23) including an initialization determiner (13a; 23a) for initializing the inference value of the consequent by using an output value of said inference rule division determiner (11; 21) and a parameter searcher (13b; 23b) which begins a search from an output of said initialization determiner (13a; 23a) so as to search for an optimum parameter of the consequent in accordance with an output of said evaluator (15; 25) so as to optimize the evaluation function 7.

2. A fuzzy inference device (K3; K4) for determining an inference result in accordance with inference rules each constituted by an antecedent and a consequent, comprising an inference result determiner (34; 44) which performs fuzzy inference in accordance with the inference rules so as to determine the inference result; characterized by an inference rule division determiner (31; 41) which receives at least data of input variables so as to determine the number of inference rules; an antecedent neural element (32) or an antecedent numerical processing determiner (42) for obtaining a membership value corresponding to an antecedent of a specific inference rule from the divided data of the input variables;

EP 0 451 742 B1

a situational change processor (33; 43) for adaptively determining an inference value of a consequent of each inference rule in the case of change of an initial state or inference situations;

an output data divider (36; 46) which receives data of output variables so as to divide the data of the output variables by the number of the inference rules in accordance with an output of said inference rule division determiner (31; 41); and

an evaluator (35; 45) for evaluating the inference result comparing the data of the output variables with the inference result outputted by said inference result determiner (34; 44);

said inference result determiner (34; 44) receiving outputs from said antecedent neural element (32) or said antecedent numerical processing determiner (42), respectively, and said situational change processor (33; 43); and

said situational change processor (33; 43) including an initialization determiner (33a; 43a) for initializing the inference value of the consequent by using an output value of said output data divider (36; 46) and a parameter searcher (33b; 43b) which begins a search from an output of said initialization determiner (33a; 43a) so as to search for an optimum parameter of the consequent in accordance with an output of said evaluator (35; 45).

**Patentansprüche**

1. Fuzzy-Inferenzvorrichtung (K1; K2) zur Bestimmung eines Inferenzergebnisses gemäß Inferenzregeln, die jeweils aus einer Bedingung und einer Schlußfolgerung bestehen, mit einer Inferenzergebnisbestimmungseinrichtung (14; 24), welche eine Fuzzy-Inferenz gemäß den Inferenzregeln durchführt, um das Inferenzergebnis zu bestimmen; gekennzeichnet durch eine Inferenzregelteilungsbestimmungseinrichtung (11; 21), welche Daten von Eingangs- und Ausgangsvariablen empfängt, um die Anzahl der Inferenzregeln zu bestimmen;

   ein neuronales Bedingungselement (12) oder eine numerische Bedingung-Verarbeitungsbestimmungseinrichtung (22) zur Erzielung eines Zugehörigkeitswertes aus den geteilten Daten der Eingangsvariablen und der Ausgangsvariablen, welcher einer Bedingung einer spezifischen Inferenzregel entspricht;
   einen Situationsveränderungsprozessor (13, 23) zur adaptiven Bestimmung eines Inferenzwertes einer Schlußfolgerung von jeder Inferenzregel für den Fall einer Veränderung eines Anfangszustandes oder einer Inferenzsituation; und
   eine Berechnungseinrichtung (15; 25) zur Berechnung des Inferenzergebnisses, das von der Inferenzergebnisbestimmungseinrichtung (14; 24) auf der Basis einer Berechnungsfunktion f ausgegeben wurde;
   wobei die Inferenzergebnisbestimmungseinrichtung (14; 24) Ausgangssignale von dem neuronalen Bedingungselement (12) bzw. der numerischen Bedingungsverarbeitungsbestimmungseinrichtung (22) und dem Situationsveränderungsprozessor (13; 23) empfängt; und wobei der Situationsveränderungsprozessor (13; 23) eine Initialisierungsbestimmungseinrichtung (13a; 23a) zur Initialisierung des Inferenzwertes der Schlußfolgerung durch Benutzung eines Ausgabewerts der Inferenzregelteilungsbestimmungseinrichtung (11; 21) und einer Parametersucheinrichtung (13b; 23b) enthält, welche eine Suche von einem Ausgangssignal der Initialisierungsbestimmungseinrichtung (13a; 23a) aus beginnt, um hierdurch einen optimalen Parameter der Schlußfolgerung in Übereinstimmung mit einem Ausgangssignal der Berechnungseinrichtung (15; 25) zu suchen, um auf diese Weise die Berechnungsfunktion (f) zu optimieren.

2. Fuzzy-Inferenzvorrichtung (K3; K4) zur Bestimmung eines Inferenzergebnisses gemäß Inferenzregeln, welche jeweils aus einer Bedingung und einer Schlußfolgerung bestehen, mit einer Inferenzergebnisbestimmungseinrichtung (34; 44), welche eine Fuzzy-Inferenz gemäß den Inferenzregeln durchführt, um so das Inferenzergebnis zu bestimmen; gekennzeichnet durch eine Inferenzregelteilungsbestimmungseinrichtung (31; 41), welche zumindest Daten von Eingangsvariablen empfängt, um die Anzahl der Inferenzregeln zu bestimmen;

   ein neuronales Bedingungselement (32) oder eine numerische Bedingungsverarbeitungsbestimmungseinrichtung (42) zur Erzielung eines Zugehörigkeitswerts aus den geteilten Daten der Eingangsvariablen, welcher einer Bedingung einer spezifischen Inferenzregel entspricht;
   einen Situationsveränderungsprozessor (33, 43) zur adaptiven Bestimmung eines Inferenzwertes einer Schlußfolgerung jeder Inferenzregel für den Fall einer Veränderung eines Ausgangszustandes oder von Inferenzsituationen;
   eine Ausgangsdatenteilungseinrichtung (36; 46), welche Daten von Ausgangsvariablen empfängt, um auf diese Weise die Daten der Ausgangsvariablen durch die Anzahl der Inferenzregeln gemäß einem Ausgangssignal der Inferenzregelteilungsbestimmungseinrichtung (31; 41) zu teilen; und

11

eine Berechnungseinrichtung (35; 45) zur Berechnung des Inferenzergebnisses, das die Daten der Ausgangsvariablen mit dem Inferenzergebnis vergleicht, das von der Inferenzergebnisbestimmungseinrichtung (34; 44) ausgegeben wurde;

wobei die Inferenzergebnisbestimmungseinrichtung (34; 44) Ausgangssignale von dem neuronalen Bedingungselement (32) beziehungsweise der numerischen Bedingungsverarbeitungsbestimmungseinrichtung (42) und dem Situationsveränderungsprozessor (33; 43) empfängt; und wobei der Situationsveränderungsprozessor (33; 43) eine Initialisierungsbestimmungseinrichtung (33a; 43a) zur Initialisierung des Inferenzwertes der Schlußfolgerung durch Benutzung eines Ausgabewertes der Ausgangsdatenteilungseinrichtung (36; 46) und einer Parametersuchvorrichtung (33b; 43b) enthält, welche eine Suche bei einem Ausgabewert der Initialisierungsbestimmungseinrichtung (33a; 43a) beginnt, um einen optimalen Parameter der Schlußfolgerung gemäß einem Ausgabewert der Berechnungseinrichtung (35; 45) zu suchen.

## Revendications

1. Dispositif de déduction floue (K1; K2) pour déterminer le résultat d'une déduction en conformité avec des règles de déduction, chacune constituée par un antécédent et un conséquent, comprenant un détermineur de résultat de déduction (14; 24) qui exécute une déduction floue en conformité avec les règles de déduction de manière à déterminer le résultat de la déduction;

   caractérisé par un détermineur de division de règle de déduction (11; 21) qui reçoit des données de variables d'entrée et des données de variables de sortie de manière à déterminer le nombre des règles de déduction; un élément neural d'antécédent (12) ou un détermineur de traitement numérique d'antécédent (22) pour obtenir une valeur d'un membre correspondant à un antécédent d'une règle de déduction spécifique à partir de la donnée divisée des variables d'entrée et des variables de sortie;

   un processeur de changement de situation (13; 23) pour déterminer de manière adaptative une valeur de déduction d'un conséquent de chaque règle de déduction dans le cas d'un changement d'un état initial ou de situations de déduction; et

   un évaluateur (15; 25) pour évaluer le résultat de la déduction sorti par ledit détermineur de résultat de déduction (14; 24) sur la base d'une fonction d'évaluation f;

   ledit détermineur de résultat de déduction (14; 24) recevant des sorties dudit élément neural d'antécédent (12) ou dudit détermineur de traitement numérique d'antécédent (22), respectivement; et dudit processeur de changement de situation (13; 23); et

   ledit processeur de changement de situation (13; 23) comportant un détermineur d'initialisation (13a; 23a) pour initialiser la valeur de déduction du conséquent en utilisant une valeur de sortie dudit détermineur de division de règle de déduction (11; 21) et un chercheur de paramètre (13b; 23b) qui débute une recherche à partir d'une sortie dudit détermineur d'initialisation (13a; 23a) de manière à rechercher un paramètre optimum du conséquent en conformité avec une sortie dudit évaluateur (15; 25) de manière à optimiser la fonction d'évaluation.

2. Dispositif de déduction floue (K3; K4) pour déterminer un résultat de déduction en conformité avec des règles de déduction, chacune constituée par un antécédent et un conséquent, comprenant un détermineur de résultat de déduction (34; 44) qui exécute une déduction floue en conformité avec les règles de déduction de manière à déterminer le résultat de la déduction;

   caractérisé par un détermineur de division de règle de déduction (31; 41) qui reçoit au moins des données de variables d'entrée de façon à déterminer le nombre des règles de déduction;

   un élément neural d'antécédent (32) ou un détermineur de traitement numérique d'antécédent (42) pour obtenir une valeur de membre qui correspond à un antécédent d'une règle de déduction spécifique à partir de la donnée divisée des variables d'entrée;

   un processeur de changement de situation (33; 43) pour déterminer de manière adaptative une valeur de déduction d'un conséquent de chaque règle de déduction dans le cas d'un changement d'un état initial ou de situations de déduction;

   un diviseur de données de sortie (36; 46) qui reçoit des données de variables de sortie de manière à diviser la donnée des variables de sortie par le nombre des règles de déduction en conformité avec une sortie dudit détermineur de division de règle de déduction (31; 41); et

   un évaluateur (35; 45) pour évaluer le résultat de la déduction comparant la donnée des variables de sortie avec le résultat de la déduction sorti par ledit détermineur de résultat de déduction (34; 44);

ledit détermineur de résultat de déduction (34; 44) recevant des sorties dudit élément neural d'antécédent (32) ou dudit détermineur de traitement numérique d'antécédent (42), respectivement, et dudit processeur de changement de situation (33; 43); et

ledit processeur de changement de situation (33; 43) incluant un détermineur d'initialisation (33a; 43a) pour initialiser la valeur de déduction du conséquent en utilisant une valeur de sortie dudit diviseur de données de sortie (36; 46) et un chercheur de paramètre (33b; 43b) qui commence une recherche à partir d'une sortie dudit détermineur d'initialisation (33a; 43a) de manière à rechercher un paramètre optimum du conséquent en conformité avec une sortie dudit évaluateur (35; 45).

Fig. 1

EP 0 451 742 B1

Fig. 2

K2

Input variable

Output variable

INF. RULE DIV. DETERMINER

21

ANTECEDENT NUMERICAL PROC. DETERMINER

22

INIT. DETERMINER

23a

PARAMETER SEARCHER

23b

23

INF. OP. QTY. DETERMINER

24

EVALUATOR

25

Inf. op. qty.

Fig. 3

Fig. 4

EP 0 451 742 B1

# Fig. 5    PRIOR ART

# Fig. 9    PRIOR ART

## Fig. 6  PRIOR ART

| IDENTIFICATION DATA | | | | | | EVALUATION DATA | | | | | |
| --- | --- | --- | --- | --- | --- | --- | --- | --- | --- | --- | --- |
| No | y | $X_1$ | $X_2$ | $X_3$ | $X_4$ | No | y | $X_1$ | $X_2$ | $X_3$ | $X_4$ |
| 1 | 11.110 | 1 | 3 | 1 | 1 | 21 | 9.545 | 1 | 1 | 5 | 1 |
| 2 | 6.521 | 1 | 5 | 2 | 1 | 22 | 6.043 | 1 | 3 | 4 | 1 |
| 3 | 10.190 | 1 | 1 | 3 | 5 | 23 | 5.724 | 1 | 5 | 3 | 5 |
| 4 | 6.043 | 1 | 3 | 4 | 5 | 24 | 11.250 | 1 | 1 | 2 | 5 |
| 5 | 5.242 | 1 | 5 | 5 | 1 | 25 | 11.110 | 1 | 3 | 1 | 1 |
| 6 | 19.020 | 5 | 1 | 4 | 1 | 26 | 14.360 | 5 | 5 | 2 | 1 |
| 7 | 14.150 | 5 | 3 | 3 | 5 | 27 | 19.610 | 5 | 1 | 3 | 5 |
| 8 | 14.360 | 5 | 5 | 2 | 5 | 28 | 13.650 | 5 | 3 | 4 | 5 |
| 9 | 27.420 | 5 | 1 | 1 | 1 | 29 | 12.430 | 5 | 5 | 5 | 1 |
| 10 | 15.390 | 5 | 3 | 2 | 1 | 30 | 19.020 | 5 | 1 | 4 | 1 |
| 11 | 5.724 | 1 | 5 | 3 | 5 | 31 | 6.380 | 1 | 3 | 3 | 5 |
| 12 | 9.766 | 1 | 1 | 4 | 5 | 32 | 6.521 | 1 | 5 | 2 | 5 |
| 13 | 5.8700 | 1 | 3 | 5 | 1 | 33 | 16.000 | 1 | 1 | 1 | 1 |
| 14 | 5.406 | 1 | 5 | 4 | 1 | 34 | 7.219 | 1 | 3 | 2 | 1 |
| 15 | 10.190 | 1 | 1 | 3 | 5 | 35 | 5.724 | 1 | 5 | 3 | 5 |
| 16 | 15.390 | 5 | 3 | 2 | 5 | 36 | 19.020 | 5 | 1 | 4 | 5 |
| 17 | 19.680 | 5 | 5 | 1 | 1 | 37 | 13.390 | 5 | 3 | 5 | 1 |
| 18 | 21.060 | 5 | 1 | 2 | 1 | 38 | 12.680 | 5 | 5 | 4 | 1 |
| 19 | 14.150 | 5 | 3 | 3 | 5 | 39 | 19.610 | 5 | 1 | 3 | 5 |
| 20 | 12.680 | 5 | 5 | 4 | 5 | 40 | 15.390 | 5 | 3 | 2 | 5 |

## Fig. 7 PRIOR ART

| IDENTIFICATION DATA | | | | MEMBERSHIP VALUE | |
|---|---|---|---|---|---|
| No. | $X_1$ | $X_2$ | $X_3$ | RULE 1 | RULE 2 |
| 1 | 1 | 3 | 1 | 0.9970 | 0.0031 |
| 2 | 1 | 5 | 2 | 0.9972 | 0.0028 |
| 3 | 1 | 1 | 3 | 0.9972 | 0.0028 |
| 4 | 1 | 3 | 4 | 0.9973 | 0.0027 |
| 5 | 1 | 5 | 5 | 0.9974 | 0.0026 |
| 6 | 5 | 1 | 4 | 0.0028 | 0.9971 |
| 7 | 5 | 3 | 3 | 0.0028 | 0.9972 |
| 8 | 5 | 5 | 2 | 0.0027 | 0.9972 |
| 9 | 5 | 1 | 1 | 0.0027 | 0.9973 |
| 10 | 5 | 3 | 2 | 0.0027 | 0.9973 |
| 11 | 1 | 5 | 3 | 0.9973 | 0.0028 |
| 12 | 1 | 1 | 4 | 0.9973 | 0.0027 |
| 13 | 1 | 3 | 5 | 0.9974 | 0.0026 |
| 14 | 1 | 5 | 4 | 0.9973 | 0.0027 |
| 15 | 1 | 1 | 3 | 0.9972 | 0.0028 |
| 16 | 5 | 3 | 2 | 0.0027 | 0.9973 |
| 17 | 5 | 5 | 1 | 0.0027 | 0.9973 |
| 18 | 5 | 1 | 2 | 0.0027 | 0.9973 |
| 19 | 5 | 3 | 3 | 0.0028 | 0.9972 |
| 20 | 5 | 5 | 4 | 0.0029 | 0.9971 |

# Fig. 8    PRIOR ART

| | IDENTIFICATION DATA | | | | | EVALUATION DATA | | | |
|---|---|---|---|---|---|---|---|---|---|
| No. | $y$ | $y*$ | $W_1^1$ | $W_1^2$ | No. | $y$ | $y*$ | $W_1^1$ | $W_1^2$ |
| 1 | 11.110 | 11.136 | 0.9970 | 0.0031 | 21 | 9.545 | 8.882 | 0.9974 | 0.0027 |
| 2 | 6.521 | 6.534 | 0.9972 | 0.0028 | 22 | 6.043 | 6.140 | 0.9973 | 0.0027 |
| 3 | 10.190 | 10.210 | 0.9972 | 0.0028 | 23 | 5.724 | 5.712 | 0.9973 | 0.0028 |
| 4 | 6.043 | 6.140 | 0.9973 | 0.0027 | 24 | 11.250 | 10.547 | 0.9971 | 0.0030 |
| 5 | 5.242 | 5.370 | 0.9974 | 0.0026 | 25 | 11.110 | 11.136 | 0.9970 | 0.0031 |
| 6 | 19.020 | 18.995 | 0.0028 | 0.9971 | 26 | 14.360 | 14.334 | 0.0027 | 0.9972 |
| 7 | 14.150 | 14.134 | 0.0028 | 0.9972 | 27 | 19.610 | 19.061 | 0.0028 | 0.9972 |
| 8 | 14.360 | 14.334 | 0.0027 | 0.9972 | 28 | 13.650 | 13.918 | 0.0029 | 0.9971 |
| 9 | 27.420 | 27.373 | 0.0027 | 0.9973 | 29 | 12.430 | 12.293 | 0.0030 | 0.9969 |
| 10 | 15.390 | 15.383 | 0.0027 | 0.9973 | 30 | 19.020 | 18.995 | 0.0028 | 0.9971 |
| 11 | 5.724 | 5.712 | 0.9973 | 0.0028 | 31 | 6.380 | 7.178 | 0.9972 | 0.0028 |
| 12 | 9.766 | 9.791 | 0.9973 | 0.0027 | 32 | 6.521 | 6.534 | 0.9972 | 0.0028 |
| 13 | 5.8700 | 5.747 | 0.9974 | 0.0026 | 33 | 16.000 | 11.239 | 0.9969 | 0.0032 |
| 14 | 5.406 | 5.450 | 0.9973 | 0.0027 | 34 | 7.219 | 9.018 | 0.9971 | 0.0029 |
| 15 | 10.190 | 10.210 | 0.9972 | 0.0028 | 35 | 5.724 | 5.712 | 0.9973 | 0.0028 |
| 16 | 15.390 | 15.383 | 0.0027 | 0.9973 | 36 | 19.020 | 18.995 | 0.0028 | 0.9971 |
| 17 | 19.680 | 19.652 | 0.0027 | 0.9973 | 37 | 13.390 | 13.892 | 0.0030 | 0.9970 |
| 18 | 21.060 | 21.046 | 0.0027 | 0.9973 | 38 | 12.680 | 12.672 | 0.0029 | 0.9971 |
| 19 | 14.150 | 14.134 | 0.0028 | 0.9972 | 39 | 19.610 | 19.061 | 0.0028 | 0.9972 |
| 20 | 12.680 | 12.672 | 0.0029 | 0.9971 | 40 | 15.390 | 15.383 | 0.0027 | 0.9973 |

EP 0 451 742 B1

Fig. 10

Fig. 11

EP 0 451 742 B1

*Fig. 12   PROR ART*